# EUROPÄISCHE PATENTANMELDUNG

(11) **EP 4 684 894 A1**
(43) Veröffentlichungstag der Anmeldung: **28.01.2026**
(21) Anmeldenummer: 24190877.1
(22) Anmeldetag: 25.07.2024
(51) Int. Cl.: B21D 13/02, B21D 22/02, B21D 22/20, B21D 28/26, B21D 35/00, H01M 8/0206, B21D 53/04

(54) **VERFAHREN UND PRESSE ZUM EINBRINGEN EINES UMFORMUNGSMUSTERS IN EIN BLECH**

(71) Anmelder: Feintool International Holding AG, 3250 Lyss (CH)
(72) Erfinder: Maurer, Christian, 3250 Lyss (CH)
(74) Vertreter: Cohausz Hannig Borkowski Wißgott

(57) **Zusammenfassung**

Die Erfindung betrifft ein Verfahren und eine Presse zum Einbringen eines Umformungsmusters in ein Blech (1) mit wenigstens einer Werkzeugeinheit (W1) einer Presse (P), insbesondere zum Herstellen einer Elektrolyseurplatte oder Brennstoffzellenplatte, wobei das Umformungsmuster in wenigstens einem Teilbereich (T) mehrere in wenigstens einer Musterrichtung (6.2) mit einem Musterabstand (6.3) nebeneinanderliegende identische Mustereinheiten (6.1) aufweist, und die Presse (P) zum Umformen nur des Teilbereichs (T) eine Werkzeugeinheit (W1) umfasst, in welcher ein oberer und ein unterer Umformungsstempel (2, 3) angeordnet sind, mit deren zusammenwirkenden Umformungsstrukturen in einem einzelnen Hub der Werkzeugeinheit (W1) wenigstens eine Mustereinheit (6.1) des Teilbereichs (T) in das zwischen den Umformungsstempeln (2, 3) geführte Blech (1) geformt wird, und das Blech (1) zwischen zwei aufeinander folgenden Hüben einer vorbestimmten Gesamtanzahl von Hüben der Werkzeugeinheit (W1) in einer der wenigstens einen Musterrichtung (6.2) entsprechenden Förderrichtung innerhalb der Werkzeugeinheit (W1) weitertransportiert wird, und in der Werkzeugeinheit (P1) mit jedem Hub der vorbestimmten Gesamtanzahl das in das Blech (1) eingebrachte Muster um wenigstens eine eingebrachte Mustereinheit (6.1) ergänzt wird bis nach der vorbestimmten Gesamtanzahl von Hüben der Teilbereich (T) des Umformungsmusters vervollständigt ist.

## Beschreibung

Die Erfindung betrifft ein Verfahren zum Einbringen eines Umformungsmusters in ein Blech, insbesondere aus Metall, mit wenigstens einer Werkzeugeinheit einer Presse. Die Erfindung betrifft auch eine Presse.

Es ist im Stand der Technik weit verbreitet Bleche aus Metall mit einem Umformungsmuster zu versehen. Ein im Blech gewünschtes Umformungsmuster wird dafür nach bisherigem Stand der Technik als korrespondierende Umformungsstruktur an einem oberen und einem unteren Umformungsstempel vorgesehen, um durch das Zusammenführen der Umformungsstempel in der Presse das Umformungsmuster auf das zwischen den Stempeln liegende Blech zu übertragen. Die Stempel werden auch als Matrize und Patrize bezeichnet. Dieses Prinzip kommt auch bei der Erfindung zum Einsatz.

Ein Anwendungsgebiet, in welchem auch die Erfindung vorzugsweise eingesetzt wird, ist die Herstellung von Elektrolyseurplatten, insbesondere sogenannten "Interconnects" für Elektrolyseure oder auch die Herstellung von Brennstoffzellplatten oder Bipolarplatten. Solche Platten weisen häufig umgeformte Geometrien, z.B. Prägungen und/oder Tiefziehbereiche und auch ausgestanzte Bereiche auf und kommen in gestapelter Ausführung z.B. in Elektrolyseuren oder auch in Brennstoffzellen zum Einsatz. Dabei definieren häufig die umgeformten Bereiche und/oder Ausstanzungen solche Bereiche in den Platten, in welchen ein Fluid geführt wird. Ausstanzungen definieren dabei häufig solche Bereiche, in denen ein Fluid zwischen verschiedenen Ebenen eines Plattenstapels geführt wird und Umformungen, z.B. Prägungen definieren solche Bereiche, in welchen ein Fluid innerhalb einer Ebene der Platte, parallel zur Ebene oder um diese herum geführt wird. Solche Platten können auch Umformungen oder Ausstanzungen aufweisen, die nicht der Fluidführung dienen, z.B. zu Montagezwecken. In solchen Platten definiert das sogenannte Flußfeld einen besonders großen örtlich zusammenhängenden Bereich von Kanälen oder Kanalabschnitten zur Fluidführung, welches einen Teilbereich eines gesamten Umformungsmusters bildet. Die Erfindung findet somit bevorzugte Anwendung bei Platten von Elektrolyseuren oder Brennstoffzellen, welche ein solches Flußfeld aufweisen.

Nach dem bisherigen Stand der Technik werden zumindest die Flußfeldbereiche von solchen Platten in einem einzigen Hub einer Werkzeugeinheit einer Presse hergestellt, worunter auch die hierbei bevorzugt eingesetzten Feinschneidvorrichtungen zählen. Dabei können vorzugsweise in einem Hub sowohl die Umformungen als auch Ausstanzungen durchgeführt werden.

Problematisch ist es, dass mit steigender Größe eines Umformungsmusters, bzw. mit steigender Anzahl der Vertiefungen / Erhebungen relativ zur Blechebene, z.B. bei einer Elektrolyseurplatte oder Bipolarplatte bzw. Brennstoffzellplatte, die zum Umformen benötigten Kräfte signifikant ansteigen, so dass ein gewünschtes Umformungsmuster mit üblichen Pressen nicht mehr in einem einzelnen Hub hergestellt werden kann. Besonders Elektrolyseurplatten weisen weit größere Flächen auf als Platten von Brennstoffzellen, so dass dieses Problem bei Elektrolyseurplatten besonders relevant ist.

Die Tendenz zur Vergrößerung von Elektrolyseurplatten oder Bipolarplatten / Brennstoffzellplatten führt sogar zu dem Problem, dass selbst die Herstellung eines Teilbereichs des gesamten Umformungsmusters einer solchen Platte, wie z.B. des Flußfeldes, nicht mehr mit bestehenden Pressen üblicher Bauart realisiert werden kann oder zumindest nicht in wirtschaftlich vertretbarer Weise oder nicht mit der erforderlichen Präzision.

Es ist daher eine Aufgabe der Erfindung ein Verfahren zum Einbringen eines Umformungsmusters in ein Blech bereitzustellen, welches mit bisherigen Pressen und darin genutzten Werkzeugeinheiten realisiert werden kann. Insbesondere soll es erschlossen werden bei Elektrolyseurplatten oder Bipolarplatten / Brennstoffzellplatten den Teilbereich des Flußfeldes vom gesamten Umformungsmuster, vorzugsweise das gesamte Umformungsmuster, insbesondere auch mit ergänzenden Ausstanzungen, auf bisherigen kommerziell erhältlichen Presse auf wirtschaftlich sinnvolle Weise herstellen zu können. Insbesondere soll so die Herstellung von Elektrolyseurplatten und/oder Brennstoffszellplatten / Bipolarplatten verbessert bzw. vereinfacht werden.

Diese Aufgabe wird dadurch gelöst, dass das Umformungsmuster in wenigstens einem Teilbereich mehrere in wenigstens einer Musterrichtung mit einem Musterabstand nebeneinanderliegende identische Mustereinheiten aufweist und die Presse zum Umformen nur des Teilbereichs eine Werkzeugeinheit umfasst, in welcher ein oberer und ein unterer Umformungsstempel angeordnet sind, mit deren zusammenwirkenden Umformungsstrukturen in einem einzelnen Hub der Werkzeugeinheit wenigstens eine Mustereinheit des Teilbereichs in das zwischen den Umformungsstempeln geführte Blech geformt wird, und das Blech zwischen zwei aufeinander folgenden Hüben einer vorbestimmten Gesamtanzahl von Hüben der Werkzeugeinheit in einer der wenigstens einen Musterrichtung entsprechenden Förderrichtung innerhalb der Werkzeugeinheit weitertransportiert wird, und in der Werkzeugeinheit mit jedem Hub der vorbestimmten Gesamtanzahl das in das Blech eingebrachte / eingeformte Muster um wenigstens eine eingebrachte Mustereinheit ergänzt wird bis nach der vorbestimmten Gesamtanzahl von Hüben der Teilbereich des Umformungsmusters vervollständigt ist. Eine Werkzeugeinheit kann vorzugsweise zusätzlich zu den Umformungstempeln noch weitere Werkzeuge umfassen, die am Verfahren teilnehmen.

Vorzugsweise wird dabei unter einem einzelnen Hub die Aufeinanderfolge von einer Schließ-Phase der Werkzeugeinheit verstanden, bei der sich die Umformungsstempel aufeinander zubewegen und von einer Öffnungs-Phase der Werkzeugeinheit verstanden, bei der sich die Umformungsstempel voneinander entfernen.

Die Umformung mittels der Umformungsstempel erfolgt z.B. durch ein bei der Schließ-Phase der Werkzeugeinheit erzeugtes Tiefziehen und/oder Prägen des Blechs, insbesondere durch ein Prägen, welches auf ein Tiefziehen folgt, vorzugsweise in demselben Hub der Werkzeugeinheit.

Das Fördern des Blechs innerhalb der Werkzeugeinheit zwischen zwei Hüben, insbesondere zwischen zwei Schließ-Phasen erfolgt vorzugsweise mittels einer Fördervorrichtung, insbesondere die in der Presse oder in der Werkzeugeinheit vorgesehen ist. Vorzugsweise bewirkt die Fördervorrichtung die Förderung des Blechs während und/oder nach der Öffnungs-Phase eines Hubs.

Die Erfindung macht sich zunutze, dass bzw. ist anwendbar wenn ein insgesamt herzustellendes Umformungsmuster in mehrere Teilbereiche zerlegt werden kann, die nacheinander herstellbar sind, wobei die Erfindung vorsieht, hier wenigstens einen solchen Teilbereich im Umformungsmuster zu identifizieren oder vorzusehen, der in mehrere identische Mustereinheiten unterteilbar ist, wobei die Mustereinheiten in dem Teilbereich nebeneinanderliegend angeordnet sind und die Mustereinheiten hierbei untereinander einen gleichbleibenden Musterabstand aufweisen.

Insbesondere kann in einer Elektrolyseurplatte oder Brennstoffzellenplatte ein solcher in mehrere Mustereinheiten unterteilbarer Teilbereich durch das sogenannte Flußfeld ausgebildet sein, in welchem innerhalb der aus mehreren solcher Platten zusammengesetzten Elektrolyseur oder Brennstoffzelle ein Fluid führbar ist. Vorzugsweise umfasst eine solche Elektrolyseurplatte oder Brennstoffzellenplatte zusätzlich zum Flußfeld auch weitere umgeformte oder ausgestanzte Bereiche, insbesondere die außen um das Flußfeld herum angeordnet sind.

In einem solchen Flußfeld können z.B. bestimmte kanalbildende Musterbereiche wiederkehrend nebeneinanderliegend auftreten. Solche wiederkehrenden Musterbereiche bilden jeweils eine Mustereinheit im Sinne der Erfindung.

Insbesondere ist es vorgesehen, dass es nur eine einzige Förderrichtung gibt, mit der das Blech in der Werkzeugeinheit transportiert wird, vorzugsweise, wenn der genannte Teilbereich nur solche Mustereinheiten umfasst, die in einer einzigen Musterrichtung nebeneinander liegen. Sofern der Teilbereich aber Mustereinheiten aufweist, die in wenigstens zwei Musterrichtungen, z.B. in zwei zueinander senkrechten Musterrichtungen nebeneinander liegen, so kann auch vorgesehen sein, dass das Blech in der Werkzeugeinheit zwischen zwei Hüben in einer von den wenigstens zwei Musterrichtungen oder in einer aus den wenigstens zwei Musterrichtungen zusammengesetzten Förderrichtung weiterbewegt wird.

Erfindungsgemäß erschließt es dieses Verfahren die benötigten Prozesskräfte zum Umformen zu reduzieren, da mit jedem Hub nur ein kleiner Teil des Teilbereichs im Umformungsmuster in das Blech eingebracht bzw. eingeformt wird, der wiederkehrend im Teilbereich vorliegt. So können selbst sehr große Flußfeldanordnungen in Elektrolyseurplatten oder Bipolarplatten / Brennstoffzellplatten mit vergleichweise kleinen Pressen erstellt werden. Dies ist insoweit mit der Erfindung sehr wirtschaftlich abbildbar, weil für das Umformen eines solchen Teilbereichs immer wieder dieselbe Paarung von oberem und unterem Umformungsstempel in derselben Werkzeugeinheit genutzt werden kann, bis der Teilbereich insgesamt fertiggestellt ist.

Sofern ein Teilbereich mit einer bestimmten Gesamtanzahl von Mustereinheiten im Umformungsmuster vorliegt, kann somit die Erfindung vorsehen, diesen Teilbereich mit bis zu einer maximalen Anzahl von Hüben umzuformen, die der Gesamtanzahl entspricht. In diesem Fall würde jede Mustereinheit in einem eigenen einzelnen Hub geformt.

Als bevorzugt wird hingegen eine Ausführung angesehen, gemäß der mit den zusammenwirkenden Umformungsstrukturen von unterem und oberem Umformungsstempel der Werkzeugeinheit in einem einzelnen Hub der Werkzeugeinheit eine Anzahl von N Mustereinheiten des Teilbereichs gleichzeitig geformt wird, wobei N>=2 ist. Bevorzugt ist die Anzahl N eine ganze Zahl größer als 15%, weiter bevorzugt größer als 20% der Gesamtanzahl aller Mustereinheiten im Teilbereich.

Vorzugsweise wird in Abhängigkeit der maximal in der Werkzeugeinheit generierbaren Umformungskräfte ermittelt, welche maximale Teilanzahl aller Mustereinheiten in einem einzigen Hub geformt werden kann, um so die nötige Anzahl von Hüben zu minimieren.

Eine bevorzugte Weiterbildung sieht es vor, dass nach einem Hub der Werkzeugeinheit durch den Weitertransport des Blechs dessen eingebrachtes Muster, insbesondere ein im vorherigen Hub erzeugter Bereich des eingebrachten Musters, in zumindest teilweise Überlappung mit den Umformungsstrukturen von oberem und unterem Umformungsstempel gebracht wird.

Durch diese Überlappung wird nach dem ersten initialen Hub mit jedem weiteren Hub mit den Umformungsstempeln ein neuer Bereich im Blech geformt, welcher der Umformungsstruktur der Umformungsstempel abzüglich des Überlappungsbereiches entspricht. Im Überlappungsbereich wird das Blech faktisch zweimal geformt, insbesondere wobei hierdurch entweder keine oder nur eine unwesentliche weitere Formung stattfindet. Die Überlappung bewirkt vorzugsweise jedoch eine Positionierung des Bleches relativ zu den Umformungsstempeln, weil sich die überlappenden schon geformten Bereiche des Bleches an den Umformungsstrukturen der Stempel ausrichten, wodurch die Präzision der Positionierung der mit jedem Hub geformten Bereiche zueinander verbessert wird.

Um die Überlappung zu erzielen kann es beispielsweise vorgesehen sein, dass das Blech um den M-fachen Musterabstand in der Förderrichtung weiterbewegt wird, wobei M<N ist und N der Anzahl von Mustereinheiten entspricht, die mit den Umformungsstempeln einbringbar sind. Vorzugsweise wird hierdurch immer eine Überlappung erzeugt, die N-M Mustereinheiten entspricht.

Weiter bevorzugt ist es vorgesehen, dass mit jedem Hub der Werkzeugeinheit in das Blech eine Positioniergeometrie eingebracht wird und in der Werkzeugeinheit oder der Presse ein Positionierelement vorgesehen ist, wobei vor und/oder mit der Schließbewegung eines Hubes das Positionierelement und die Positioniergeometrie zueinander in eine vorbestimmte Lage zueinander gebracht werden.

Die Schließbewegung eines Hubes ist dabei die Bewegung, bei welcher der obere und untere Umformungsstempel auf einander zu bewegt werden.

Die Positioniergeometrie kann bevorzugt eine ausgestanzte Positionieröffnungen sein. Das Positionierelement kann bevorzugt ein Positionierstift sei, der zumindest bereichsweise in die Positionieröffnung einfährt. Der Positionierstift kann vorzugsweise Bestandteil der Werkzeugeinheit, insbesondere eines der Umformungsstempel sein, oder zumindest ein Bestandteil der Presse sein, der im Hub bewegt wird.

Vorzugsweise liegt der Ort der Einbringung der Positioniergeometrie in einem Bereich des Bleches, in welchem keine Anteile des wiederholt einzubringenden Teilbereiches liegen.

Dies erschließt auch den Vorteil, die Positioniergeometrie mit einem Stempel zu formen oder bevorzugt auszustanzen, der in der Werkzeugeinheit oder der Presse benachbart zu den Umformungsstempeln liegt. Ebenso kann das Positionierelement benachbart zu den Umformungsstempeln in der Werkzeugeinheit oder der Presse angeordnet werden.

Vorzugsweise ist es dabei vorgesehen, dass die Positionieröffnung ein kreisrundes Loch ist und der Positionierstift einen Kreisquerschnitt aufweist. Bevorzugt ist vorgesehen, dass sich der Stift, insbesondere unabhängig von den genannten Querschnittsformen, in Richtung zu seinem freien Ende verjüngt. Insbesondere kann dabei vorgesehen sein, dass der Stift sich vom freien Ende / der Spitze ausgehend im Außenquerschnitt/-durchmesser bis auf ein Maß erweitert, welches größer ist als der Innenquerschnitt/-durchmesser der Positionieröffnung. In diesem Fall kann der Stift nicht vollständig durch die Positionieröffnung hindurchtauchen, zentriert aber die Öffnung um seine Spitze. Die Eintauchtiefe ist damit auf den sich verjüngenden Spitzenbereich beschränkt, was ein Verklemmen des Stiftes in der Öffnung verhindert und/oder das Zurückziehen aus der Positionieröffnung erleichtert. Vorzugsweise ist der Positionierstift in axialer Richtung der Hubbewegung in der Werkzeugeinheit oder der Presse nachgiebig gelagert.

Eine bevorzugte Ausführung sieht es vor, dass die Positioniergeometrien jeweils in einem Bereich des Blechs angeordnet werden, in welchem in einem späteren Stanzschritt, insbesondere welcher mit einer anderen Werkzeugeinheit derselben Presse oder einer anderen Presse durchgeführt wird, wenigstens eine Ausstanzung eingebracht wird, insbesondere wobei durch die wenigstens eine Ausstanzung wenigstens eine Positioniergeometrie entfernt wird, vorzugsweise wobei eine Ausstanzung eine fluidführende Funktion in einem Paket mehrerer Elektrolyseurplatten oder Brennstoffzellplatten aufweist. Bevorzugt werden durch mehrere Ausstanzungen alle zuvor hergestellten Positioniergeometrien entfernt. So wird sichergestellt, dass die Positioniergeometrie nur ein vorübergehendes Element des Bleches während dessen Bearbeitung ist, welches im später fertiggestellten Blech nicht mehr vorhanden ist.

Bevorzugt ist vorgesehen, dass in der Werkzeugeinheit ein Element zum Einbringen der Positioniergeometrie, insbesondere ein Lochstempel, und das Positionierelement in der Förderrichtung mit einem Abstand angeordnet werden, welcher kleiner ist als die Anzahl der mit den Umformungsstempeln formbaren Mustereinheiten, insbesondere welcher M x Musterabstand entspricht.

Insbesondere ergibt sich hierdurch, dass der Abstand kleiner ist als die Breite der Umformungsstempel betrachtet in der Förderrichtung des Blechs, vorzugsweise wobei die Breite der Umformungsstempel N x Musterabstand ist.

Die Erfindung sieht es bevorzugt vor, dass in bzw. mit wenigstens einer weiteren Werkzeugeinheit Musteranteile des Umformungsmusters in das Blech eingeformt werden und/oder Ausstanzungen und/oder Randschnitte in das Blech eingebracht werden, die nicht Teil des Teilbereichs sind, insbesondere außen um diesen herum angeordnet sind.

Die weitere Werkzeugeinheit kann in derselben Presse angeordnet sein, wie die vorgenannte Werkzeugeinheit zum wiederholenden Formen des Teilbereichs, insbesondere als sogenanntes Folgewerkzeug, oder auch in einer anderen Presse oder es kann vorgesehen sein, die Werkzeugeinheit zum wiederholenden Formen des Teilbereichs in derselben Presse zu tauschen gegen die genannte weitere Werkzeugeinheit zum Formen vom Musteranteilen, die nicht Teil des Teilbereichs sind.

In letzterem Fall sieht die Erfindung vorzugsweise somit zwei Werkzeugeinheiten vor, wobei mit einer ersten Werkzeugeinheit der Teilbereich mit sich wiederholenden Mustereinheiten formbar ist und mit einer zweiten Werkzeugeinheit die Musteranteile des Umformungsmusters in das Blech formbar sind, die nicht Teil des Teilbereichs sind, insbesondere um diesen herum liegen, wobei die Presse zunächst mit einer der beiden Werkzeugeinheiten ausgerüstet wird, insbesondere mit der ersten Werkzeugeinheit, und eine Anzahl von Blechen mit diesem Werkzeug geformt werden und in einem Puffer zwischengelagert werden und anschließend dieselbe Presse mit der anderen der beiden Werkzeugeinheiten ausgerüstet wird, insbesondere mit der zweiten Werkzeugeinheit, und Bleche dem Puffer entnommen werden und die entnommenen Bleche mit der anderen Werkzeugeinheit geformt werden. Im Verfahren werden somit die beiden Werkzeugeinheiten in der Presse im Tausch genutzt, insbesondere wobei es irrelevant ist, welche der Werkzeugeinheiten zuerst genutzt wird.

Die wenigstens eine weitere Werkzeugeinheit kann dabei eine Bearbeitung zeitlich vor der zuvor genannten Werkzeugeinheit vornehmen, bevorzugt wird aber vorgesehen, dass sie eine Bearbeitung des Bleches zeitlich nach dem Formen des wenigstens einen Teilbereichs vornimmt, insbesondere wobei mit der wenigstens einen weiteren Werkzeugeinheit in einem einzigen Hub zusätzlich zu der Gesamtanzahl der Hübe zum Formen des wenigstens einen Teilbereichs das Blech fertiggestellt wird.

Fertiggestellt bedeutet dabei vorzugsweise nur, dass eine weitere Bearbeitung des Blechs mit der Presse nicht mehr vorgesehen ist. Eine weitere Bearbeitung kann hingegen in anderen Bearbeitungsstationen vorgesehen sein.

Insbesondere wird nach der Bearbeitung des Blechs durch die wenigstens eine weitere Werkzeugeinheit derselben Presse das Blech aus der Presse herausbefördert.

Es wird dabei als vorteilhaft angesehen, dass mit der wenigstens einen weiteren Werkzeugeinheit Ausstanzungen eingebracht werden, welche die Positioniergeometrien vollständig überdecken, insbesondere hierdurch entfernen.

Die zuvor eingebrachten Positioniergeometrien liegen somit in Bereichen die nachfolgend ausgestanzt werden. Insbesondere sind das Ausstanzungen, die in dem fertigstellten Blech eine Funktion übernehmen, z.B. zum Zweck der Befestigung und/oder zur Fluidführung, vorzugsweise wenn das fertiggestellte Blech eine Elektrolyseurplatte oder Brennstoffzellplatte / Bipolarplatte bildet.

Besonders in dieser Weiterbildung ist es bevorzugt vorgesehen, die genannte weitere Werkzeugeinheit zeitlich nach derjenigen Werkzeugeinheit zu nutzen, mit welcher der genannte Teilbereich geformt wird.

Die Erfindung betrifft zusätzlich zum Verfahren auch eine Presse mit wenigstens einer Werkzeugeinheit, insbesondere die sich dadurch auszeichnet, dass mit ihr das Verfahren durchführbar ist.

Die Presse umfasst erfindungsgemäß wenigstens eine Werkzeugeinheit, wobei diese wenigstens eine Werkzeugeinheit einen oberen und einen unteren Umformungsstempel aufweist, mit deren zusammenwirkenden Umformungsstrukturen in einem einzelnen Hub der Werkzeugeinheit wenigstens eine Mustereinheit eines Teilbereichs aus einem in ein Blech einzuformenden Umformungsmusters einbringbar ist, welcher in wenigstens einer Musterrichtung mehrere mit einem Musterabstand nebeneinanderliegende identische Mustereinheiten aufweist, und die Werkzeugeinheit eingerichtet ist mit mehreren Hüben den Teilbereich sukzessive bis zur Vervollständigung zu formen.

Vorzugsweise ist vorgesehen, dass mit den zusammenwirkenden Umformungsstrukturen in einem einzelnen Hub eine Vielzahl von Mustereinheiten des Teilbereichs einbringbar ist.

Dabei wird dies so verstanden, dass in einem einzelnen Hub erfindungsgemäß nicht alle Mustereinheiten gleichzeitig geformt werden, sondern nur eine Teilanzahl aller Mustereinheiten.

Bevorzugt ist es dabei vorgesehen, dass die Presse, insbesondere deren Werkzeugeinheit, eine Fördervorrichtung aufweist, mittels der das Blech zwischen aufeinanderfolgenden Hüben innerhalb der Werkzeugeinheit weiterbewegbar ist, insbesondere um wenigstens einen Musterabstand, vorzugsweise um ein Vielfaches des Musterabstands, weiterbewegbar ist.

Eine mögliche Ausführung kann es vorsehen, dass dieselbe Presse zusätzlich zu der vorgenannten Werkzeugeinheit wenigstens eine weitere Werkzeugeinheit auf weist, insbesondere nur genau eine einzige weitere Werkzeugeinheit aufweist, mit der Musteranteile des Umformungsmusters geformt werden und/oder Ausstanzungen in das Blech einbringbar sind, die nicht Teil des Teilbereichs sind, insbesondere die außen um diesen herum angeordnet sind. Vorzugsweise ist mit der einzigen weiteren Werkzeugeinheit das Umformungsmuster im Blech, bzw. das Blech insgesamt, insbesondere eine Elektrolyseurplatte oder Brennstoffzellenplatte fertigstellbar, vorzugsweise mit einem einzigen Hub. Die wenigstens zwei Werkzeugeinheiten bilden in diesem Fall Folgewerkzeuge derselben Presse, zwischen deren das Blech innerhalb der Presse weiterbewegbar ist.

Eine andere Ausführung kann es auch vorsehen, dass in der Presse die Werkzeugeinheit zum Formen der Mustereinheiten des Teilbereichs austauschbar ist gegen die weitere Werkzeugeinheit, mit der Musteranteile in das Blech formbar sind, die nicht Teil des Teilbereichs sind, insbesondere um diesen herum angeordnet sind.

Eine Presse, bevorzugt zur Herstellung von Elektrolyseurplatten oder Brennstoffzellplatten, kann in einer möglichen Ausführung auch mehrere / wenigstens zwei Werkzeugeinheiten aufweisen, wobei mit jeder solchen Werkzeugeinheit ein jeweils anderer Teilbereich geformt wird oder zumindest formbar ist, der aus identischen Mustereinheiten zusammengesetzt ist.

Eine solche Presse kann in einer Weiterbildung ebenso eine weitere Werkzeugeinheit aufweisen, die alle verbleibenden Anteile des Blechs, insbesondere der Elektrolyseurplatte oder Brennstoffzellplatte formt und/oder stanzt.

Die Erfindung wird anhand der Figuren für ein bevorzugtes Ausführungsbeispiel bei der Herstellung von Brennstoffzellplatten oder Elektrolyseurplatten beschrieben.

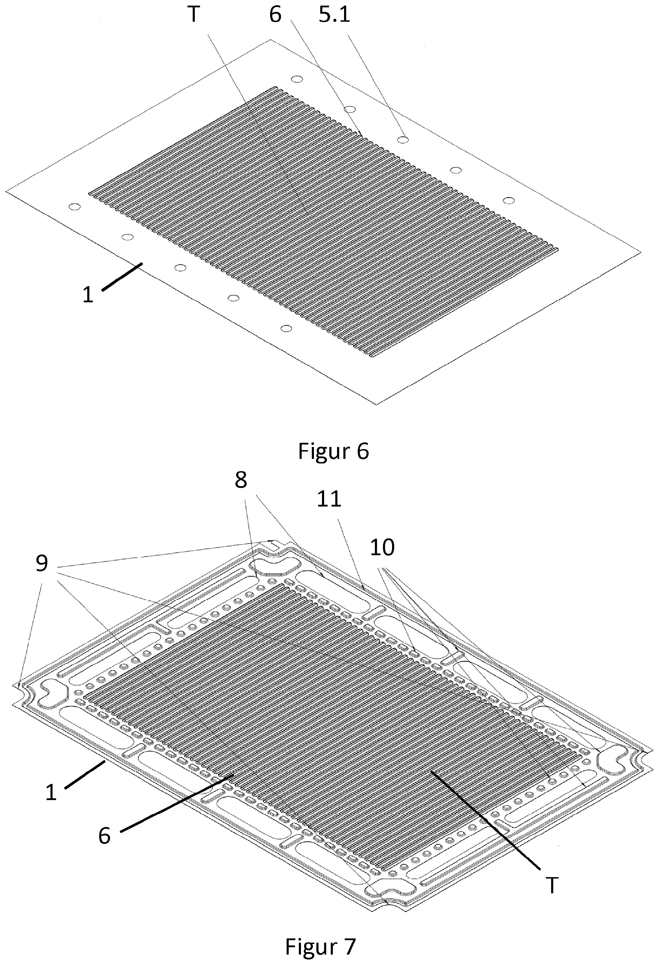

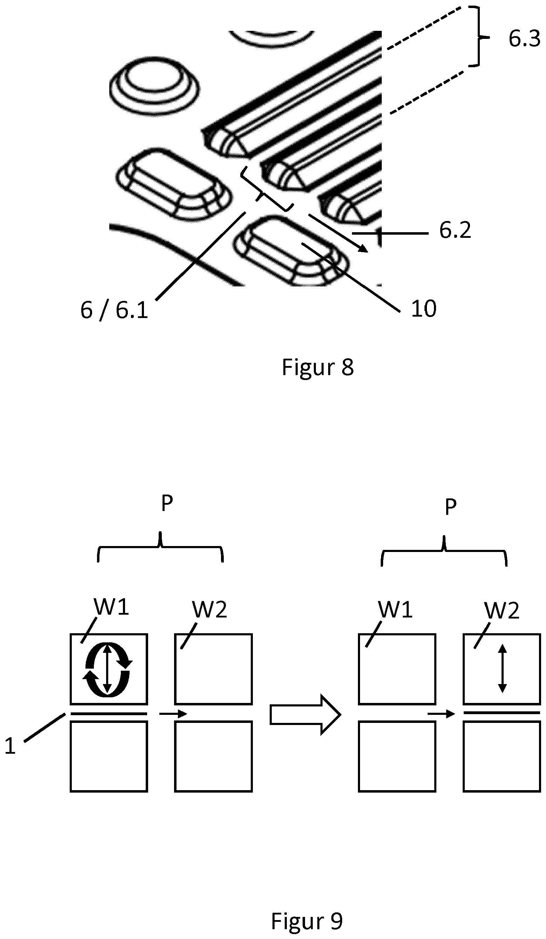

Die hiermit vorweg diskutierten Figuren 7 und 8 zeigen in der perspektivischen Übersicht bzw. im Detail das aus einem ebenen Blech 1 hergestellte Produkt, in diesem Fall eine Elektrolyseurplatte oder Bipolarplatte oder Brennstoffzellenplatte, insbesondere aus der durch Stapeln mit anderen Platten und Elementen ein Elektrolyseur oder eine Brennstoffzelle zusammenfügbar ist.

Das fertig hergestellte Blech 1 weist hier ein Umformungsmuster auf, insbesondere auch zusätzlich zu diesem noch weitere Bearbeitungen, z.B. Ausstanzungen und randbeschnittene Bereiche. Insbesondere gilt dies für alle erfindungsgemäß hergestellten Bleche 1, auch außerhalb der bevorzugten Anwendung bei der Herstellung von Elektrolyseurplatten oder Bipolarplatten / Brennstoffzellplatten. Das Umformungsmuster ist in allen Ausführungen der Erfindung gegeben durch sämtliche Erhebungen und/oder Vertiefungen relativ zur Ebene des ursprünglich noch nicht verformten Blechs 1. Es entsteht durch umformende Bearbeitung des Blechs 1 z.B. durch Tiefziehen und/oder Prägen.

Solche Erhebungen und/oder Vertiefungen des Umformungsmusters erzielen unterschiedliche Funktionen in dem geformten Blech 1. Sie können bei der bevorzugten Anwendung z.B. Stützstrukturen bilden, über welche benachbarte Bleche 1 / Elektrolyseurplatten / Bipolarplatten sich aneinander oder an anderen Elementen eines Stapels abstützen. Sie können z.B. auch Dichtungsbereiche bilden, insbesondere am Rand des umgeformten und vorzugsweise beschnittenen Blechs 1. Ein besonders signifikanter, insbesondere flächengrößter Bereich im Umformungsmuster wird hier durch Erhebungen und/oder Vertiefungen gebildet, welche das sogenannte Flußfeld der Elektrolyseurplatte oder Bipolarplatte / Brennstoffzellenplatte bzw. des Blechs 1 bilden.

Das Flußfeld umfasst in dieser dargestellten Ausführung eine Vielzahl von längserstrecken Kanälen 6, die alle identisch ausgebildet sind und senkrecht zu deren Längserstreckungsrichtung äquidistant nebeneinander liegen. In anderen als der gezeigten Ausführung kann das Flußfeld auch eine andere Geometrie aufweisen. Die Erfindung ist, auch in der bevorzugten Anwendung auf Elektrolyseurplatten oder Brennstoffzellenplatten / Bipolarplatten nicht auf das konkret dargestellte Flußfeld beschränkt. Insbesondere kann ein Flußfeld auch andere Kanalverläufe und/oder Kanalabschnitte aufweisen, weist aber erfindungsgemäß im Flußfeld eine Periodizität von einer Mustereinheit auf.

Daran ist ersichtlich, dass das gesamte Umformungsmuster, welches in das Blech 1 mit einer Presse P, insbesondere mit deren wenigstens einer Werkzeugeinheit, einzubringen ist, einen Teilbereich aufweist, der in dieser bevorzugten Anwendung das Flußfeld bildet, der sich dadurch auszeichnet, dass darin eine Mustereinheit 6.1 in wenigstens einer Musterrichtung 6.2 (hier z.B. genau einer einzigen Musterrichtung) mehrfach nebeneinanderliegend angeordnet ist, wobei die nebeneinanderliegenden Mustereinheiten 6.1 alle denselben Musterabstand 6.3 aufweisen. Diese Zusammenhänge verdeutlicht die Detailansicht der Figur 8. Das Muster im Teilbereich weist damit einen Rapport auf, bzw. eine Periodizität, die dem Musterabstand 6.3 entspricht. Die in diesem Fall der Elektrolyseurplatte oder Bipolarplatte kleinste Mustereinheit 6.1 des Teilbereichs ist ein einzelner Kanal 6. Der Musterabstand 6.3 ist der Abstand zwischen zwei benachbarten Kanälen 6 bzw. zwischen zwei Mustereinheiten 6.1.

Aufgrund der Vielzahl der Erhebungen und/oder Vertiefungen, die im flächengrößten Teil des Bleches 1 herzustellen sind, kann ein solches Flußfeld nicht oder nur mit wirtschaftlich nicht zu vertretendem Aufwand mittels eines einzelnen Hubs mit einer Werkzeugeinheit einer Presse P hergestellt werden, da diese dafür sehr kräftig dimensioniert sein müsste.

Die Erfindung zielt darauf ab, einen solchen in identische Mustereinheiten 6.1 zerlegbaren Teilbereich eines gesamten Umformungsmusters mehrfach wiederholend in ein und derselben Werkzeugeinheit W1 sukzessive mit sich identisch wiederholenden Hüben und immer mit demselben Paar von zwei sich in Hubrichtung gegenüberliegenden und bewegenden Umformungsstempeln 2/3 zu erzeugen, zwischen denen das Blech 1 in einer Förderrichtung, die der Musterrichtung 6.2 entspricht, weiterbewegt wird. Das Weiterbewegen, z.B. mit einer am Blech angreifenden Fördervorrichtung, erfolgt dabei in einem Zustand, in welchem die Umformungsstempel 2,3 zueinander beabstandet sind und zwischen sich einen Spalt bilden. Die Musterrichtung 6.2 ist dabei die Richtung, in welcher die Mustereinheiten 6.1 nebeneinanderliegend angeordnet sind. Die Musterrichtung 6.2 ist hier senkrecht zur Längserstreckungsrichtung der Kanäle 6 und/oder parallel zur Längserstreckungsrichtung des Bleches 1.

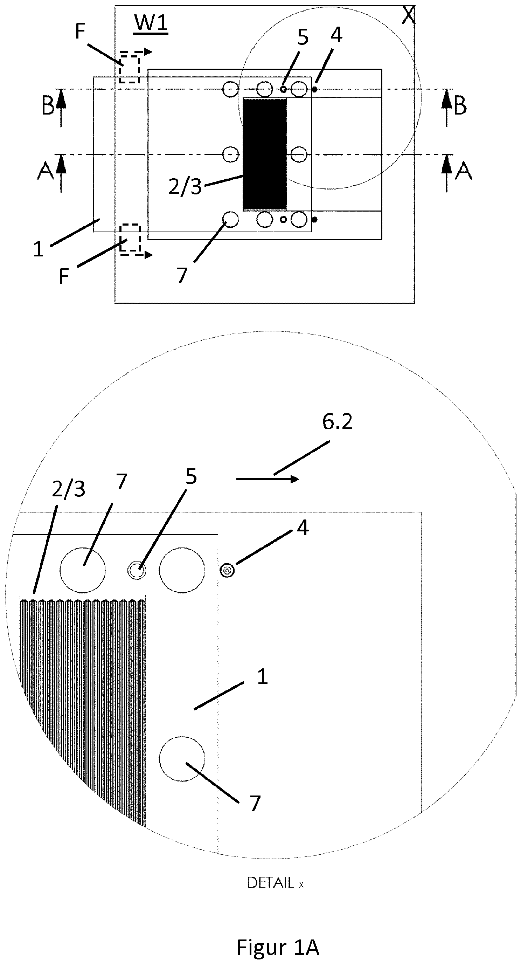

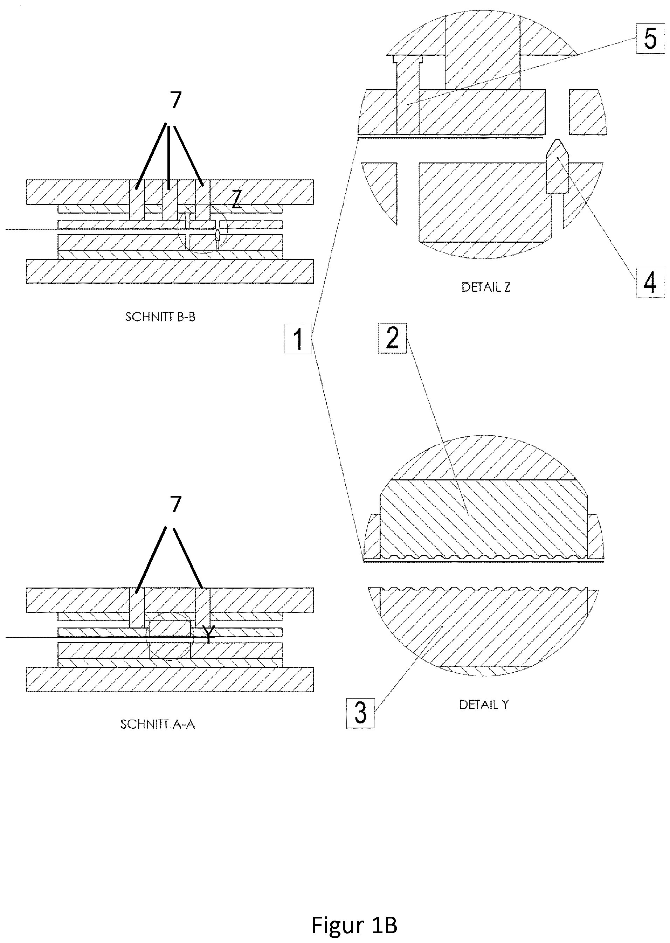

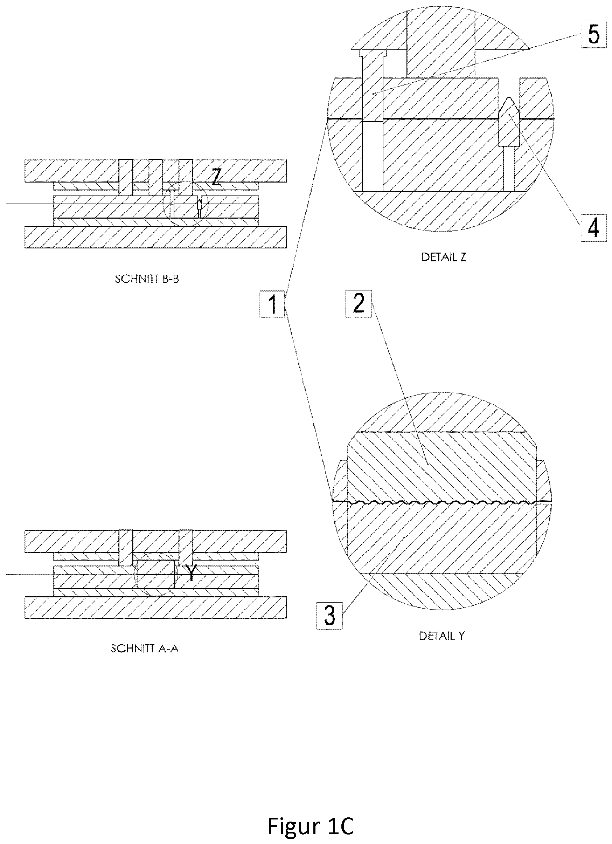

Die Figuren 1 verdeutlichen die zusammenwirkenden Komponenten einer Werkzeugeinheit W1 bei einem ersten initialen Hub, nachdem ein zu formendes Blech 1, vorzugsweise ein bis dahin noch nicht verformtes Blech 1, in diese Werkzeugeinheit W1 in einer Förderrichtung, die der Musterrichtung 6.2 entspricht, hineinbewegt wurde, insbesondere mit einer am Blech 1 angreifenden Fördervorrichtung.

Die Figur 1A zeigt einen Horizontalschnitt einer Werkzeugeinheit W1 einer Presse P mit Durchsicht auf weitere Elemente in anderen Ebenen parallel zur Schnittebene mit dem darin liegenden Blech 1, z.B. in einem offenen Zustand der Werkzeugeinheit W1, in welchem die Umformungsstempel 2 und 3 einen Abstand aufweisen, so dass das Blech 1 zwischen den Umformungsstempeln 2 und 3 bewegbar ist.

Beispielhaft ist in Figur 1A gestrichelt eine Fördervorrichtung F dargestellt, die vorzugsweise beidseits des Blechs 1 an diesem angreift, um es zu bewegen. Die in der Figur 1A gewählte beispielhafte Darstellung der Fördervorrichtung F beschränkt die Erfindung nicht. Eine Förderung des Bleches 1 kann auch durch andere Anordnungen einer Fördervorrichtung F erzielt werden.

Für den geöffneten Zustand zeigt die Figur 1B den Schnitt A-A und den Schnitt B-B der Figur 1A mit herausvergrößerten Details. Die Figur 1C zeigt den Schnitt A-A und den Schnitt B-B der Figur 1A mit herausvergrößerten Details für den geschlossenen Zustand, in welchem also die Umformungsstempel 2 und 3 aufeinander zu bewegt wurden, um deren Umformungsstruktur in das Blech 1 zu übertragen.

Hierbei zeigt der Schnitt A-A einen Schnitt durch die Umformungsstempel 2, 3, vorzugsweise mittig, und der Schnitt B-B einen Bereich, der senkrecht zur Förderrichtung seitlich versetzt neben den Umformungsstempeln 2/3 liegt.

Der obere Umformungsstempel 2 und der untere Umformungsstempel 3 weisen zueinander korrespondierende (insbesondere zueinander negative) Umformungsstrukturen auf, mit denen eine Vielzahl von N Mustereinheiten 6.1, hier also z.B. Kanäle 6, gleichzeitig mit einem Hub in das Blech 1 geformt werden können. Die Kanäle 6 sind in einer Richtung senkrecht zur Blechebene offen. Diese Vielzahl N der Mustereinheiten 6.1, die mit den Umformungsstempeln 2, 3 in einem Hub gleichzeitig ins Blech 1 geformt werden kann, ist kleiner als die Gesamtanzahl aller im Teilbereich des Umformungsmusters, hier des Flußfeldes liegenden Mustereinheiten 6.1. In diesem Beispiel können 14 Mustereinheiten 6.1 gleichzeitig geformt werden. Diese Zahl ist für die Erfindung nicht beschränkend und kann grundsätzlich einen beliebigen Wert annehmen, insbesondere der kleiner ist als die Gesamtanzahl der Mustereinheiten 6.1 im Teilbereich und vorzugsweise größer ist als 1.

Die Werkzeugeinheit W1 weist neben den in Hubrichtung aufeinander zu und voneinander weg bewegbaren Umformungsstempeln 2, 3 Bolzen 7 auf, mit denen das Blech 1 in der Werkzeugeinheit W1 in seiner Lage beim Umformen fixiert werden kann. Solche Bolzen 7 können vorzugsweise um die Umformungsstempel 2, 3 herum angeordnet sein.

Seitlich in einer Richtung senkrecht zur Förderrichtung 6.2 neben die Umformungsstempel 2, 3, insbesondere somit auch neben das einzubringende Muster im Teilbereich versetzt, sind als Element zur Einbringung einer Positioniergeometrie ein Lochstempel 5 und als Positionierelement 4 ein Stift vorgesehen. Lochstempel 5 und Positionierelement 4 bilden zusätzlich zu den Umformungsstempeln 2, 3 vorzugsweise weitere Werkzeuge der Werkzeugeinheit W1.

Im ersten Hub der Werkzeugeinheit W1 kann der Stift 4 noch nicht in ein vom Lochstempel 5 ausgestanztes Loch einfahren und hierdurch eine Positionierung vornehmen. Das Blech 1 kann hingegen bei der initialen Bewegung in die Werkzeugeinheit W1 hinein bis an den Stift 5 herangefahren werden, z.B. bis zum Kontakt mit dem Stift 4. Vorzugsweise ist beim initialen Hub die Positionierung der einzubringenden /zu formenden Mustereinheiten 6.1 nicht kritisch, da es im Blech 1 keine Referenz gibt, an der diese erste Umformung ausgerichtet werden muss. Vielmehr dient die Zusammenwirkung von Stift 5 mit der von dem Lochstempel 5 gestanzten Positioniergeometrie 5.1 dazu, nachfolgende Formungen von Mustereinheiten 6.1. an den zuvor geformten Mustereinheiten 6.1 auszurichten, wie im Folgenden noch beschrieben wird.

In der unteren Detaildarstellung der Figur 1B wird die Anordnung des noch nicht geformten Bleches 1 zwischen den Umformungsstempeln 2, 3 gezeigt, wobei die oberen Detaildarstellung zeigt, dass das Blech 1 bis an den Stift 4 heranbewegt wurde. In dieser Position des Bleches 1 wird ein erster Hub mit der Werkzeugeinheit W1 durchgeführt, d.h. das Blech 1 mit den Bolzen 7 geklemmt und die Umformungsstempel 2, 3 aufeinander zu bewegt, wodurch deren Umformungsstruktur in das Blech übertragen wird und damit eine Anzahl von N (vorzugsweise N>1) Mustereinheiten 6.1 gleichzeitig geformt wird, hier in diesem Beispiel 14 Mustereinheiten 6.1 geformt werden.

Die geschlossene Stellung der Werkzeugeinheit W1 zeigt die Figur 1C. Mit dem Hub zum Einbringen bzw. Formen der N Mustereinheiten 6.1, die eine Teilanzahl aller Mustereinheiten 6.1 des Teilbereichs ist, wird gleichzeitig auch als Positioniergeometrie 5.1 ein Positionierloch in das Blech 1 seitlich versetzt neben die Umformung in das Blech 1 eingebracht.

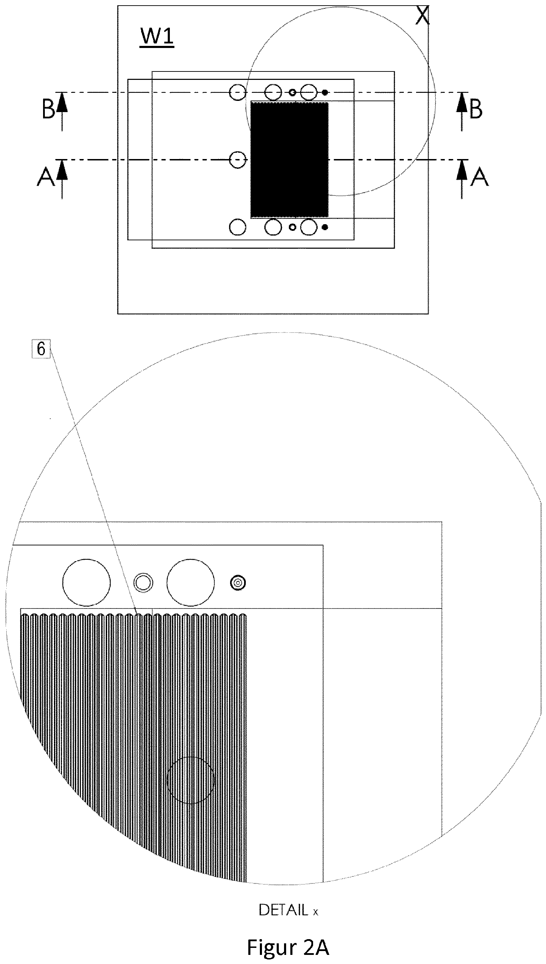

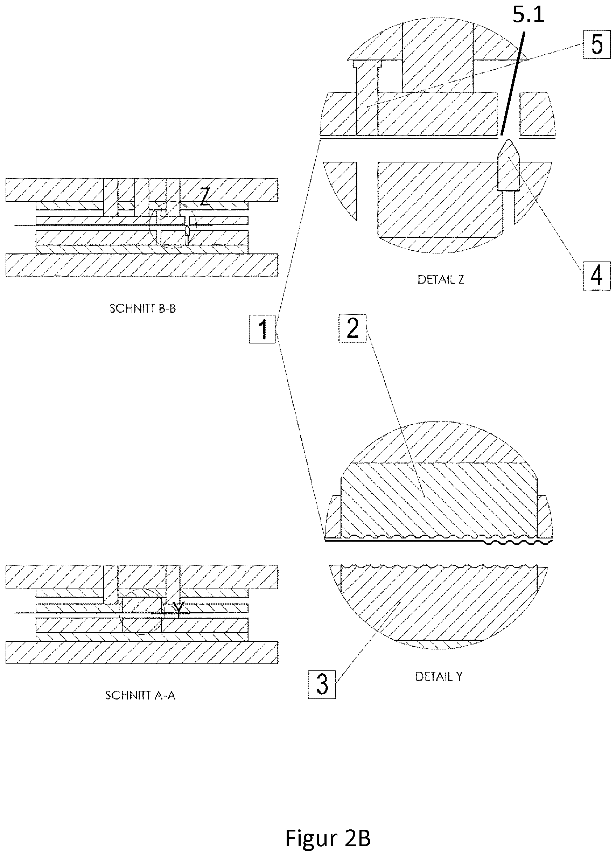

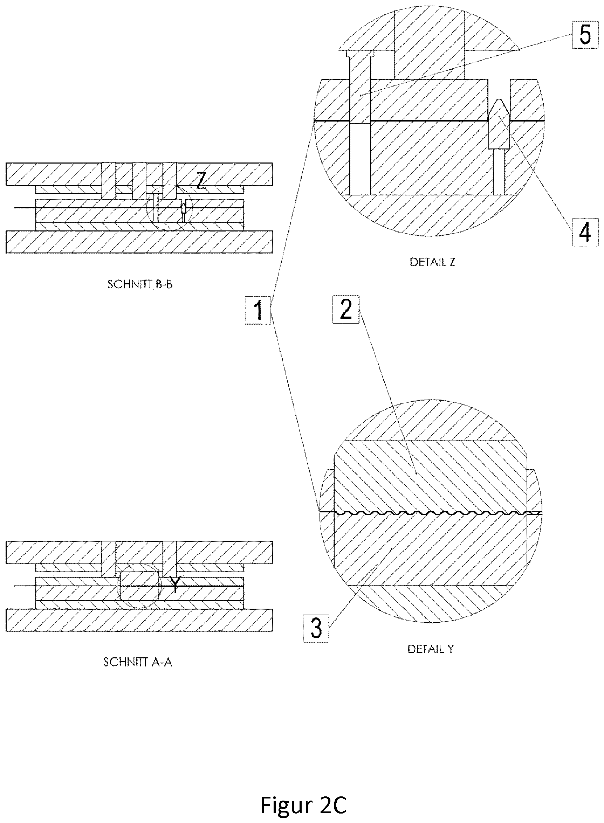

Die Figuren 2 zeigen die gleiche Situation für einen nachfolgenden zweiten Hub der Werkzeugeinheit W1, nachdem das Blech 1 nach der Durchführung des ersten Hubes in der Förderrichtung 6.2, die der Musterrichtung entspricht, weiterbewegt wurde. Hierdurch wird ein bereits geformter Bereich in Förderrichtung zumindest bereichsweise neben die Umformungsstempel 2,3 bewegt.

Besonders die untere Detaildarstellung der Figur 2B zeigt bei der geöffneten Werkzeugeinheit W1, dass durch die Weiterbewegung des Blechs 1 die zuvor erstellte Umformung nicht vollständig neben die Umformungsstempel 2, 3 bewegt wird, sondern dass nach einem Hub der Werkzeugeinheit W1 durch den Weitertransport des Blechs ein im vorherigen Hub erzeugter, in der Förderrichtung nacheilender Bereich des eingeformten Musters in Überlappung mit den Umformungsstrukturen von oberem und unterem Umformungsstempel gebracht wird.

Weiterhin zeigt die obere Detaildarstellung, dass der Stift 4, nach dem Weitertransport des Blechs 1 in Überdeckung mit der gestanzten Positioniergeometrie 5.1. steht.

Ab dem zweiten Hub und für jeden weiteren Hub gilt somit, dass mit Schließen der Werkzeugeinheit W1 beim Hub, so wie es die Figur 2C zeigt, der verjüngend zulaufende Stift 4 in die Positioniergeometrie 5.1 einfährt, hierdurch das Blech 1, insbesondere noch vor dem vollständigen Schließen der Umformungsstempel 2,3, positioniert wird, vorzugsweise weil sich die Positioniergeometrie 5.1 um das verjüngende freie Ende des Stiftes 4 herum zentriert.

Zusätzlich zum bestehenden Überlapp zwischen der Umformungsstruktur der Umformungsstempel 2, 3 mit einem in Förderrichtung nacheilenden Teilbereich der im vorherigen Hub erzeugten Einformung der N Mustereinheiten, wird eine sehr hohe relative Positionierungsgenauigkeit der durch den Hub hinzuzufügenden Umformung zu der vorherigen Umformung erzielt. Hierbei ist darauf hinzuweisen, dass die in den Figuren gezeigte Überlappung nicht zwingend nötig ist, da eine ausreichende Positionierung auch bereits durch die Zusammenwirkung des Stiftes 4 mit der Positioniergeometrie 5.1 erzielt wird.

Die Figur 2B verdeutlicht, dass in diesem Beispiel ein Überlapp von der Umformungsstruktur der Umformungsstempel 2,3, mit einigen, hier insbesondere 4 Mustereinheiten der vorherigen Umformung erfolgt. Die Bewegung des Blechs 1 nach einen Hub erfolgt somit um M Mustereinheiten, wobei M kleiner ist als die Anzahl N der im vorherigen Hub eingebrachten/geformten oder zumindest einbringbaren/formbaren Mustereinheiten. In dem gezeigten Beispiel sind die Werte N=14 und M=10, so dass sich ein beispielhafter Überlapp von N-M = 4 Mustereinheiten ergibt.

Mit dem nachfolgenden zweiten Hub werden somit wiederum N (14) Mustereinheiten geformt, von denen M (10) Mustereinheiten neu geformt werden und N-M (4) Mustereinheiten, nämlich die im Überlapp liegenden Mustereinheiten 6.1. ein zweites Mal geformt werden. In Abhängigkeit der Bewegungsweite des Bleches 1 zwischen zwei Hüben wird der Abstand zwischen den Stift 4 und dem Stempel 5 zum Einbringen der Positioniergeometrie 5.1 festgelegt. Dieser Abstand ist hier M x Musterabstand.

Durch die beschriebene Funktionsweise wird mit dem ersten Hub eine Anzahl von N Mustereinheiten 6.1 in das Blech 1 geformt, wobei nach einer Weiterbewegung des Bleches um M Mustereinheiten mit M<N, also bei einem bestehenden Überlapp von N-M Mustereinheiten mit jedem nachfolgenden Hub das in das Blech 1 geformte Muster um M Mustereinheiten ergänzt wird, bis dass im letzten Hub die Formung des Teilbereichs des Umformungsmusters abgeschlossen ist.

Eine vorbestimmte Gesamtanzahl von zu formenden Mustereinheiten 6.1 in einem Teilbereich eines Umformungsmusters kann so durch die Anzahl der mit einem Paar von Umformungsstempeln 2,3 formbaren Mustereinheiten 6.1 und einem gewählten Überlapp immer auf eine ganze Anzahl von Hüben aufgeteilt werden. Der Überlapp dient somit nur ergänzend einer Präzisionssteigerung und kann vorrangig genutzt werden, um eine Aufteilung der Gesamtanzahl von Mustereinheiten auf mehrere Hübe in sinnvoller Weise zu gestalten.

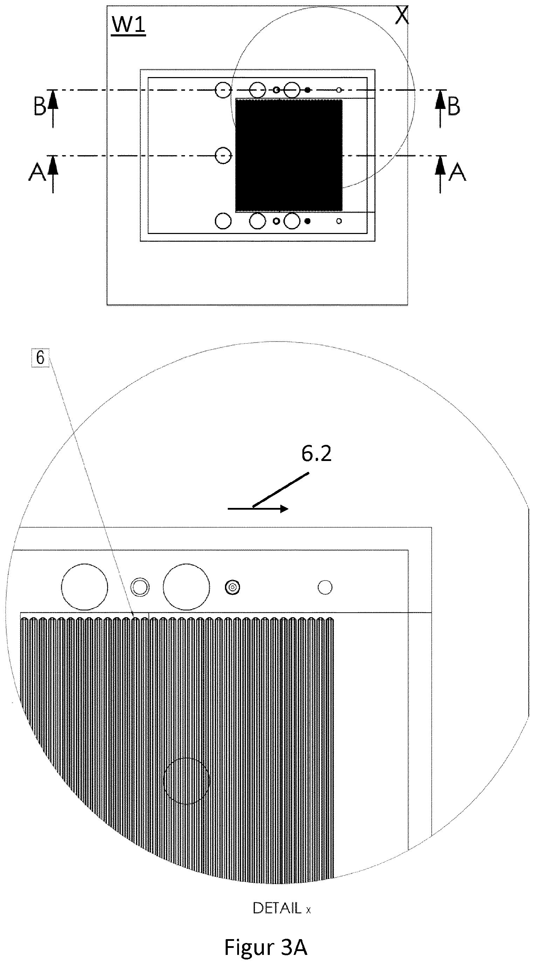

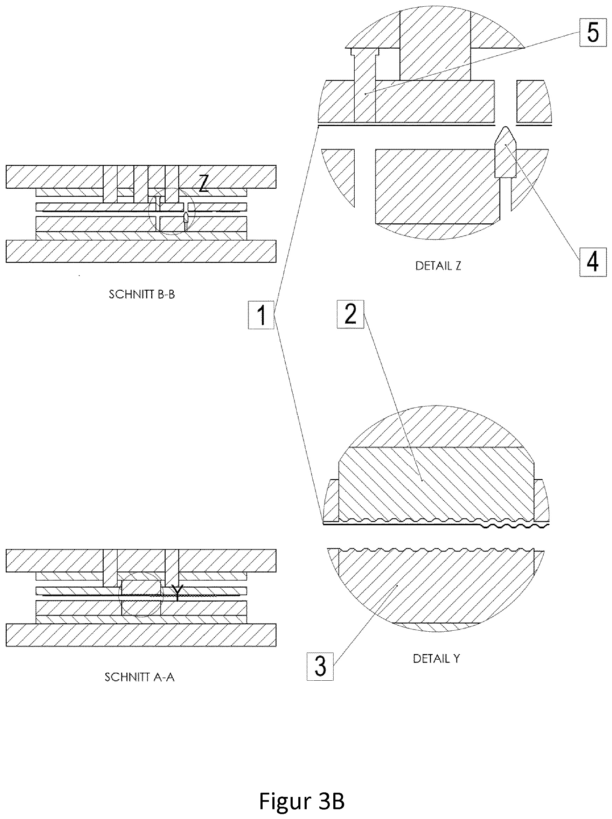

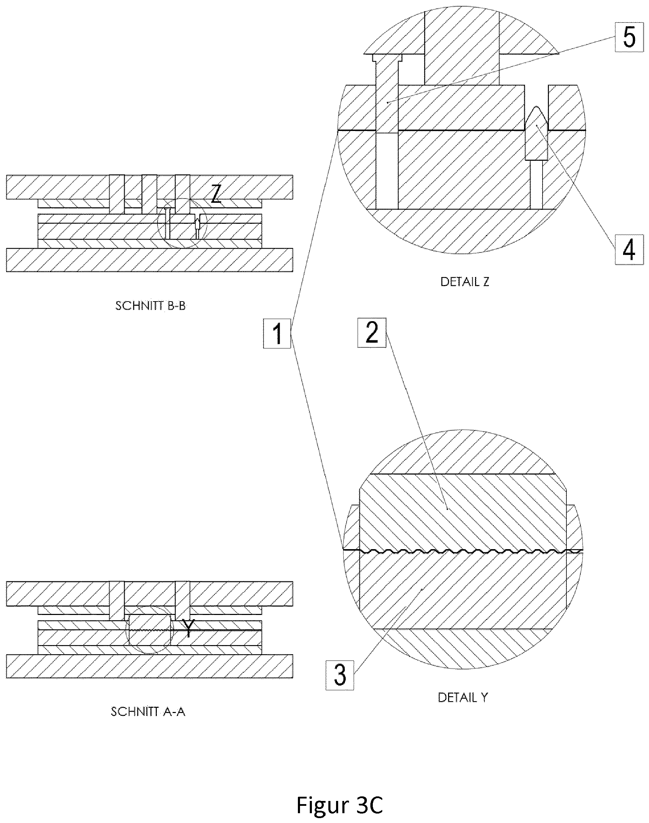

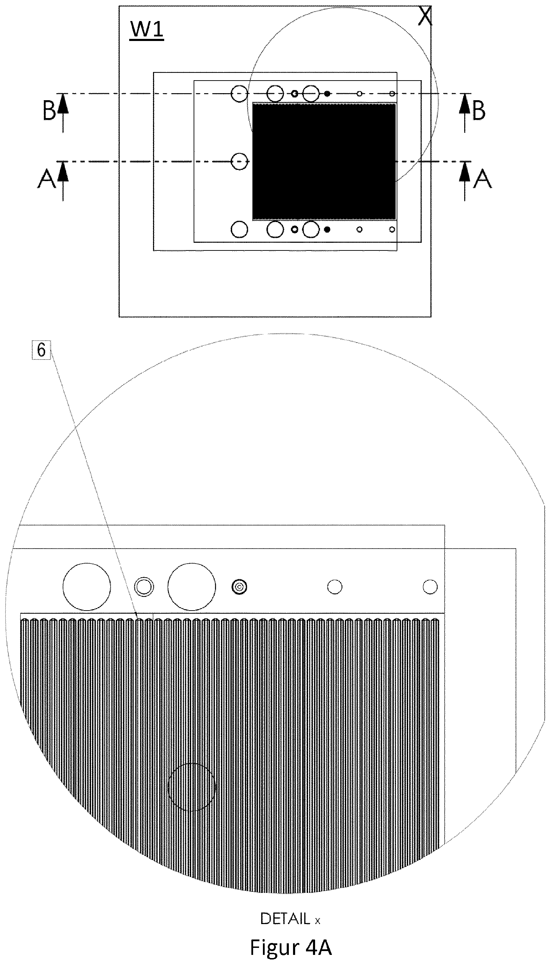

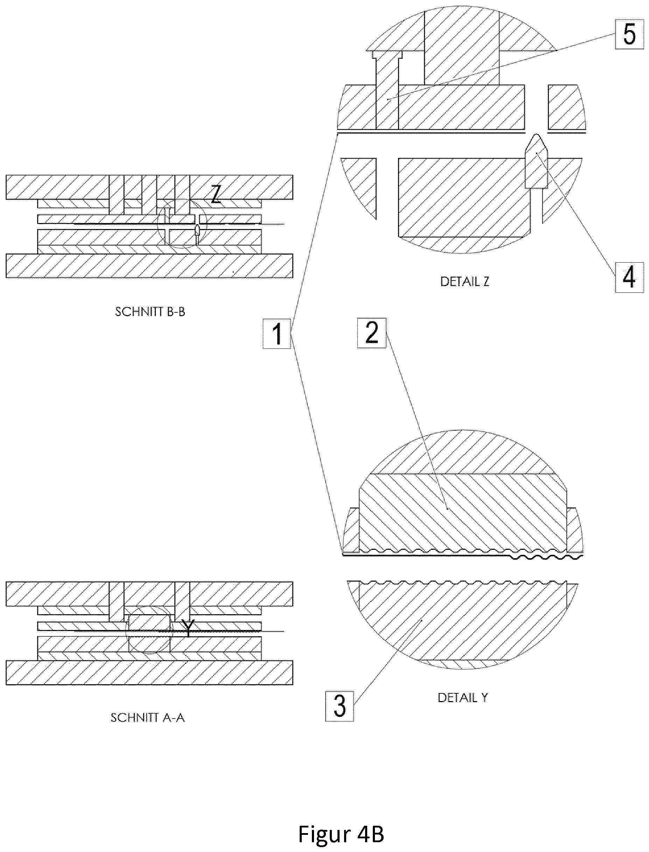

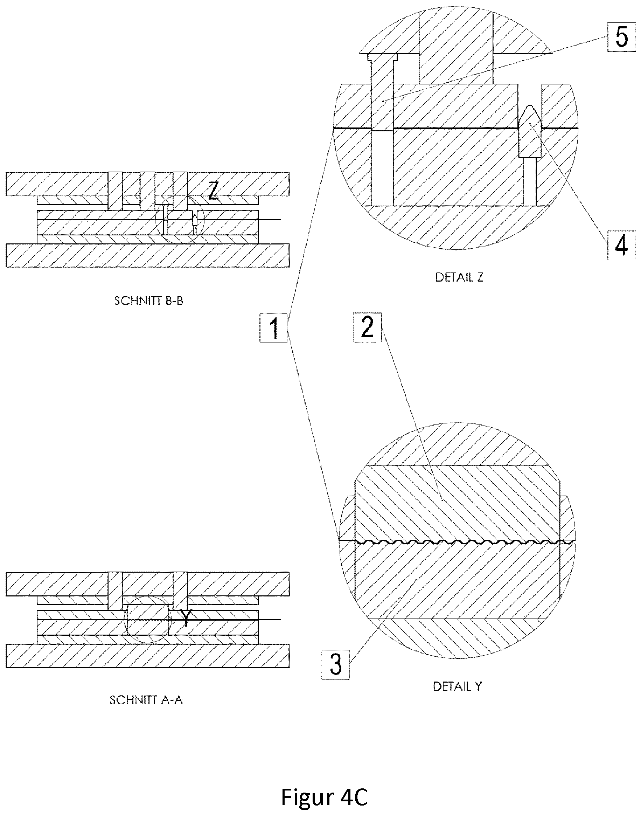

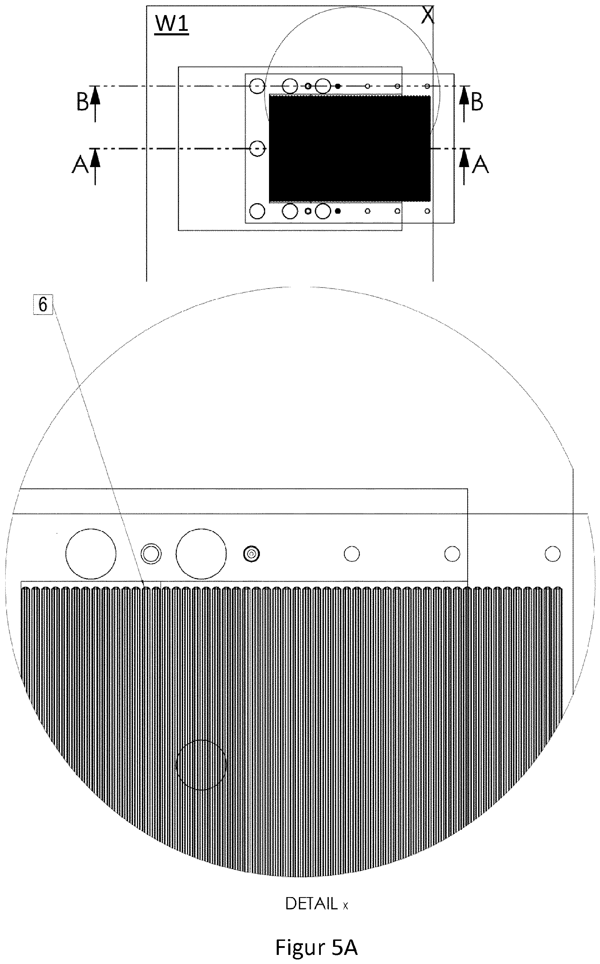

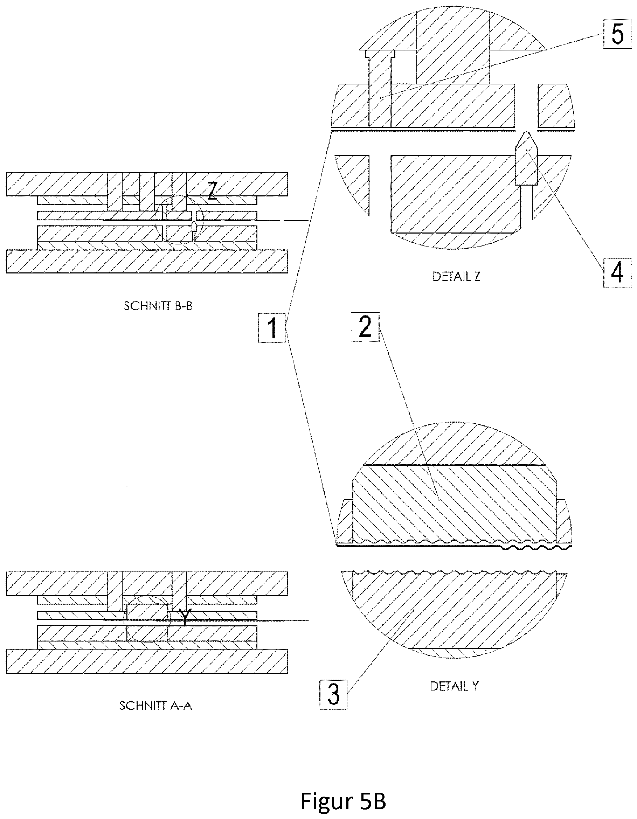

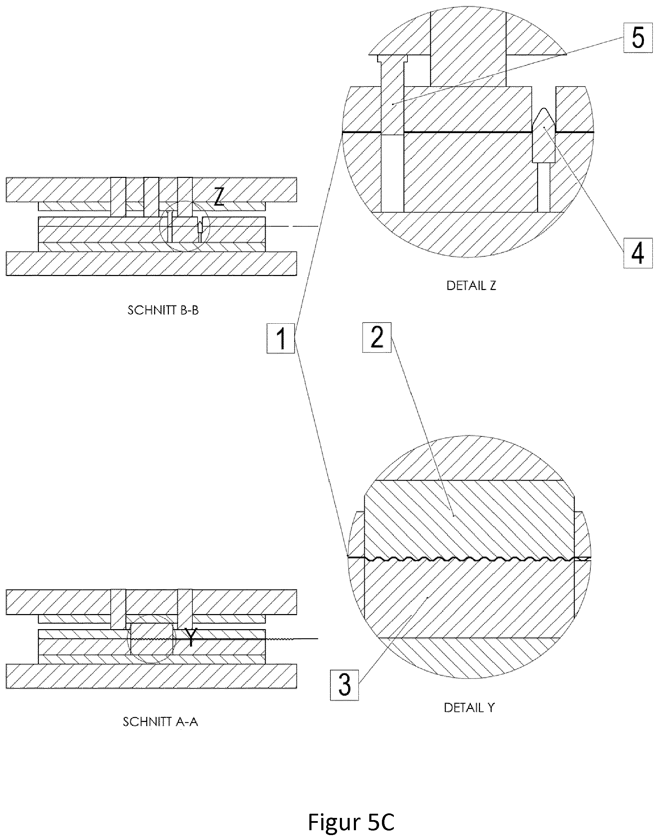

Die nachfolgenden Figuren 3 bis 5 zeigen die Wiederholung der Hübe und der damit einhergehenden Positionierung des Blechs 1 mit der Positioniergeometrie 5.1 am Stift 4, sowie die Einbringung einer jeweils neuen Positioniergeometrie 5.1. mittels des Lochstempels 5 mit jedem Hub.

Die Figur 6 zeigt das Endresultat der Umformung mit der Werkzeugeinheit W1, nachdem mit einer vorbestimmten Anzahl von Hüben die Formung des Teilbereichs T des Umformungsmusters sukzessive aufgebaut wurde. Gemäß Figur 6 ist somit das Flußfeld aus dem Kanälen 6 fertiggestellt, wobei das Flußfeld seitlich von den hierbei erstellten Positioniergeometrien 5.1 umgeben ist.

Mit wenigstens einer weiteren Werkzeugeinheit W2 werden nun verbleibende Teile des Umformungsmusters, insbesondere Tiefziehbereiche oder Prägungen, um den zuvor geformten Teilbereich T herum erstellt. Zusätzlich können mit der wenigstens einen weiteren Werkzeugeinheit W2, vorzugsweise mit genau einer einzigen weiteren Werkzeugeinheit W2 mit einem einzigen Hub auch Ausstanzungen 8 und/oder Randbescheidungen 9 und/oder Stützgeometrien 10 und/oder Dichtungskanäle 11 am Blech 1 erstellt werden.

Die Anordnung von zumindest einigen der Ausstanzungen 8, die vorzugsweise als Durchlass für Fluide in einem Elektrolyseur oder einer Brennstoffzelle dienen, liegt so, dass durch diese Ausstanzungen 8 die zuvor eingebrachten Positioniergeometrien 5.1 wieder entfernt werden.

Die Figur 9 zeigt symbolisch in einer Übersicht eine Presse P gemäß der Erfindung zur Durchführung des Verfahrens.

Diese umfasst mindestens eine erste Werkzeugeinheit W1, in welcher durch eine Anzahl sich wiederholender Hübe mit demselben Paar von zwei Umformungsstempeln ein Teilbereich des Umformungsmusters in das Blech 1 eingebracht bzw. geformt wird, welcher sich wiederholend nebeneinander liegende Mustereinheiten 6.1 aufweist. Nach den mehrfachen Hüben zur Vervollständigung des Teilbereichs wird das Blech 1 von der ersten Werkzeugeinheit W1 in die zweite Werkzeugeinheit W2 Presse transportiert. Die zweite Werkzeugeinheit W2 ist hier Teil derselben Presse P, welche auch die erste Werkzeugeinheit W1 umfasst.

In der Werkzeugeinheit W2, welches das iterativ geformte Blech 1 aus der Werkzeugeinheit 1 übernimmt, wird vorzugsweise mit einem einzigen weiteren Hub das Umformungsmuster des Bleches 1 komplettiert, d.h. alle Umformungen vorgenommen, die zusätzlich zum Teilbereich vorgesehen sind. Zusätzlich können weitere Ausstanzungen oder Beschneidungen am Blech in demselben Hub vorgenommen werden. Die Erfindung kann aber auch vorsehen, die weitere Bearbeitung des Bleches 1 nach der Werkzeugeinheit W1 auf mehrere Werkzeugeinheiten W2 zu verteilen, z.B. mit einer weiteren Werkzeugeinheit W2 die verbleibenden Umformungen vornehmen und mit einer nochmals weiteren Werkzeugeinheit W2 Ausstanzungen und/oder Randschnitte durchführen.

Die Werkzeugeinheiten W1 und W2 können alternativ auch in verschiedenen Pressen oder durch Auswechselung zeitlich nacheinander in derselben Presse betrieben werden.

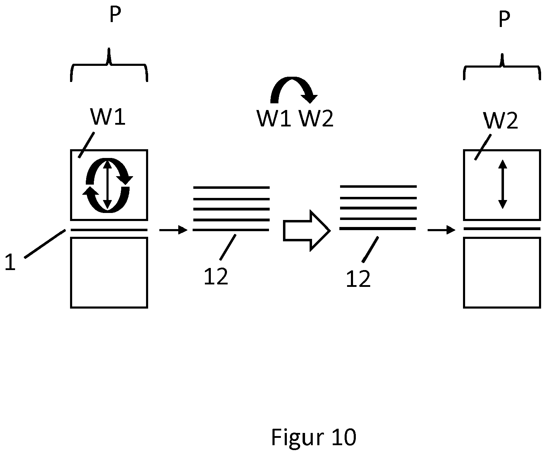

Die Figur 10 visualisiert eine Ausführung, in welcher in der Presse P zunächst die Werkzeugeinheit W1 eingesetzt ist. Die der Presse P zugeführten Bleche 1 werden hier zunächst nur mit der Werkzeugeinheit W1 geformt, d.h. der Teilbereich sukzessive geformt, wie es erfindungsgemäß vorgesehen ist. Die so geformten Bleche 1 werden in einen Puffer 12 zugeführt.

Nach Formung einer vorbestimmten Anzahl von Blechen 1 wird in der Presse P die Werkzeugeinheit W1 ausgetauscht gegen die Werkzeugeinheit W2, insbesondere mit welcher solche Musteranteile in das Blech 1 geformt werden können, die nicht Teil des hergestellten Teilbereichs T sind. Nach dem Tausch werden die zuvor geformten Bleche 1 dem Puffer 12 entnommen und erneut der Presse P zugeführt, um diese sodann mit der Werkzeugeinheit W2 zu formen, insbesondere fertig zu stellen.

## Patentansprüche

1. Verfahren zum Einbringen eines Umformungsmusters in ein Blech (1) mit wenigstens einer Werkzeugeinheit (W1) einer Presse (P), insbesondere zum Herstellen einer Elektrolyseurplatte oder Brennstoffzellenplatte, **dadurch gekennzeichnet, dass**
a. das Umformungsmuster in wenigstens einem Teilbereich (T) mehrere in wenigstens einer Musterrichtung (6.2) mit einem Musterabstand (6.3) nebeneinanderliegende identische Mustereinheiten (6.1) aufweist, und
b. die Presse (P) zum Umformen nur des Teilbereichs (T) eine Werkzeugeinheit (W1) umfasst, in welcher ein oberer und ein unterer Umformungsstempel (2, 3) angeordnet sind, mit deren zusammenwirkenden Umformungsstrukturen in einem einzelnen Hub der Werkzeugeinheit (W1) wenigstens eine Mustereinheit (6.1) des Teilbereichs (T) in das zwischen den Umformungsstempeln (2, 3) geführte Blech (1) geformt wird, und
c. das Blech (1) zwischen zwei aufeinander folgenden Hüben einer vorbestimmten Gesamtanzahl von Hüben der Werkzeugeinheit (W1) in einer der wenigstens einen Musterrichtung (6.2) entsprechenden Förderrichtung innerhalb der Werkzeugeinheit (W1) weitertransportiert wird, und
d. in der Werkzeugeinheit (P1) mit jedem Hub der vorbestimmten Gesamtanzahl das in das Blech (1) eingebrachte Muster um wenigstens eine eingebrachte Mustereinheit (6.1) ergänzt wird bis nach der vorbestimmten Gesamtanzahl von Hüben der Teilbereich (T) des Umformungsmusters vervollständigt ist.

2. Verfahren nach Anspruch 1, **dadurch gekennzeichnet, dass** mit den zusammenwirkenden Umformungsstrukturen von unterem und oberem Umformungsstempel (2, 3) der Werkzeugeinheit (W1) in einem einzelnen Hub der Werkzeugeinheit (W1) eine Anzahl von N Mustereinheiten des Teilbereichs (T) gleichzeitig eingebracht wird, wobei N>=2 ist.

3. Verfahren nach Anspruch 2, **dadurch gekennzeichnet, dass** nach einem Hub der Werkzeugeinheit (W1) durch den Weitertransport des Blechs (1) dessen eingebrachtes Muster in zumindest teilweise Überlappung, insbesondere ein im vorherigen Hub erzeugter Bereich des eingebrachten Musters in Überlappung, mit den Umformungsstrukturen von oberem und unterem Umformungsstempel (2, 3) gebracht wird.

4. Verfahren nach Anspruch 2 oder 3, **dadurch gekennzeichnet, dass** das Blech (1) um den M-fachen Musterabstand (6.3) in der Förderrichtung weiterbewegt wird, wobei M<N ist.

5. Verfahren nach einem der vorherigen Ansprüche, **dadurch gekennzeichnet, dass** mit jedem Hub der Werkzeugeinheit (W1) in das Blech (1) eine Positioniergeometrie (5.1) eingebracht wird, insbesondere eine Positionieröffnung eingestanzt wird, und in der Werkzeugeinheit (W1) oder der Presse (P) ein Positionierelement (4) vorgesehen ist, insbesondere ein Positionierstift vorgesehen ist, wobei vor und/oder mit der Schließbewegung eines Hubes das Positionierelement (4) und die Positioniergeometrie (5.1) zueinander in eine vorbestimmte Lage zueinander gebracht werden, insbesondere der Positionierstift (4) in die Positionieröffnung (5.1) einfährt.

6. Verfahren nach Anspruch 5, **dadurch gekennzeichnet, dass** die Positioniergeometrien (5.1) jeweils in einem Bereich des Blechs (1) angeordnet werden, in welchem in einem späteren Stanzschritt, insbesondere welcher mit einer anderen Werkzeugeinheit (W2) derselben Presse (P) oder einer anderen Presse durchgeführt wird, wenigstens eine Ausstanzung (8) eingebracht wird, insbesondere wobei durch die wenigstens eine Ausstanzung (8) wenigstens eine Positioniergeometrie (5.1) entfernt wird, vorzugsweise wobei eine Ausstanzung (8) eine fluidführende Funktion in einem Paket mehrerer Elektrolyseurplatten oder Brennstoffzellplatten aufweist.

7. Verfahren nach Anspruch 5 oder 6, **dadurch gekennzeichnet, dass** in der Werkzeugeinheit (W1) ein Element (5) zum Einbringen der Positioniergeometrie (5.1), insbesondere ein Lochstempel (5), und das Positionierelement (4) in der Förderrichtung mit einem Abstand angeordnet werden, welcher kleiner ist als die Anzahl der mit den Umformungsstempeln (2, 3) formbaren Mustereinheiten (6.1), insbesondere welcher M x Musterabstand (6.3) entspricht.

8. Verfahren nach einem der vorherigen Ansprüche, **dadurch gekennzeichnet, dass** in wenigstens einer weiteren Werkzeugeinheit (W2) derselben Presse (P) oder einer anderen Presse Musteranteile des Umformungsmusters in das Blech (1) eingebracht werden und/oder Ausstanzungen (8) und/oder Randschnitte (9) in das Blech (1) eingebracht werden, die nicht Teil des Teilbereichs (T) sind, insbesondere außen um diesen herum angeordnet sind.

9. Verfahren nach Anspruch 8, **dadurch gekennzeichnet, dass** die wenigstens eine weitere Werkzeugeinheit (W2) eine Bearbeitung des Bleches (1) zeitlich nach dem Einbringen des wenigstens einen Teilbereichs (T) vornimmt, insbesondere mit der wenigstens einen weiteren Werkzeugeinheit (W2) in einem einzigen Hub zusätzlich zu der Gesamtanzahl der Hübe zum Einbringen des wenigstens einen Teilbereichs (T) das Blech (1) fertiggestellt wird.

10. Verfahren nach Anspruch 8 oder 9, **dadurch gekennzeichnet, dass** mit der wenigstens einen weiteren Werkzeugeinheit (W2) Ausstanzungen (8) in das Blech (1) eingebracht werden, welche die Positioniergeometrien (5.1) vollständig überdecken, insbesondere die Positioniergeometrien (5.1) hierdurch entfernen.

11. Presse (P) zur Durchführung eines Verfahren nach einem der vorherigen Ansprüche, **dadurch gekennzeichnet, dass** sie wenigstens eine Werkzeugeinheit (W1) umfasst, wobei die Werkzeugeinheit (W1) einen oberen und einen unteren Umformungsstempel (2, 3) aufweist, mit deren zusammenwirkenden Umformungsstrukturen in einem einzelnen Hub der Werkzeugeinheit (W1) wenigstens eine Mustereinheit (6.1) eines Teilbereichs (T) aus einem in ein Blech (1) einzubringenden Umformungsmuster einbringbar ist, welcher in wenigstens einer Musterrichtung (6.2) mehrere mit einem Musterabstand (6.3) nebeneinanderliegende identische Mustereinheiten (6.1) aufweist, und die Werkzeugeinheit (W1) eingerichtet ist mit mehreren Hüben den Teilbereich (T) sukzessive bis zur Vervollständigung zu formen.

12. Presse nach Anspruch 11, **dadurch gekennzeichnet, dass** sie, insbesondere deren Werkzeugeinheit (W1), eine Fördervorrichtung (F) aufweist, mittels der das Blech zwischen aufeinanderfolgenden Hüben innerhalb der Werkzeugeinheit (W1) weiterbewegbar ist, insbesondere um wenigstens einen Musterabstand (6.3), vorzugsweise um ein Vielfaches des Musterabstands (6.3) weiterbewegbar ist.

13. Presse nach Anspruch 11 oder 12, **dadurch gekennzeichnet, dass**
a. sie wenigstens eine weitere Werkzeugeinheit (W2) aufweist, insbesondere als Folgewerkzeug, mit welcher, vorzugsweise in einem einzigen Hub, Musteranteile des Umformungsmusters in das Blech (1) einbringbar sind und/oder Ausstanzungen (8) und/oder Randschnitte (9) in das Blech (1) einbringbar sind, die nicht Teil des Teilbereichs (T) sind, insbesondere außen um diesen herum angeordnet sind, oder
b. die Werkzeugeinheit (W1) zur Formung des Teilbereichs (T) des Umformungsmusters in der Presse (P) austauschbau ist gegen eine Werkzeugeinheit (W2), mit welcher, vorzugsweise in einem einzigen Hub, Musteranteile des Umformungsmusters in das Blech (1) einbringbar sind und/oder Ausstanzungen (8) und/oder Randschnitte (9) in das Blech (1) einbringbar sind, die nicht Teil des Teilbereichs (T) sind, insbesondere außen um diesen herum angeordnet sind.

## Geänderte Patentansprüche

### Geänderte Patentansprüche gemäss Regel 137(2) EPÜ.

1. Verfahren zum Einbringen eines Umformungsmusters in ein Blech (1) mit wenigstens einer Werkzeugeinheit (W1) einer Presse (P), insbesondere zum Herstellen einer Elektrolyseurplatte oder Brennstoffzellenplatte, wobei
a. das Umformungsmuster in wenigstens einem Teilbereich (T) mehrere in wenigstens einer Musterrichtung (6.2) mit einem Musterabstand (6.3) nebeneinanderliegende identische Mustereinheiten (6.1) aufweist, und
b. die Presse (P) zum Umformen nur des Teilbereichs (T) eine Werkzeugeinheit (W1) umfasst, in welcher ein oberer und ein unterer Umformungsstempel (2, 3) angeordnet sind, mit deren zusammenwirkenden Umformungsstrukturen in einem einzelnen Hub der Werkzeugeinheit (W1) wenigstens eine Mustereinheit (6.1) des Teilbereichs (T) in das zwischen den Umformungsstempeln (2, 3) geführte Blech (1) geformt wird, und
c. das Blech (1) zwischen zwei aufeinander folgenden Hüben einer vorbestimmten Gesamtanzahl von Hüben der Werkzeugeinheit (W1) in einer der wenigstens einen Musterrichtung (6.2) entsprechenden Förderrichtung innerhalb der Werkzeugeinheit (W1) weitertransportiert wird, und
d. in der Werkzeugeinheit (P1) mit jedem Hub der vorbestimmten Gesamtanzahl das in das Blech (1) eingebrachte Muster um wenigstens eine eingebrachte Mustereinheit (6.1) ergänzt wird bis nach der vorbestimmten Gesamtanzahl von Hüben der Teilbereich (T) des Umformungsmusters vervollständigt ist,
**dadurch gekennzeichnet, dass**
e. mit jedem Hub der Werkzeugeinheit (W1) in das Blech (1) eine Positioniergeometrie (5.1) eingebracht wird, insbesondere eine Positionieröffnung eingestanzt wird, und in der Werkzeugeinheit (W1) oder der Presse (P) ein Positionierelement (4) vorgesehen ist, insbesondere ein Positionierstift vorgesehen ist, wobei vor und/oder mit der Schließbewegung eines Hubes das Positionierelement (4) und die Positioniergeometrie (5.1) zueinander in eine vorbestimmte Lage zueinander gebracht werden, insbesondere der Positionierstift (4) in die Positionieröffnung (5.1) einfährt, und
f. die Positioniergeometrien (5.1) jeweils in einem Bereich des Blechs (1) angeordnet werden, in welchem in einem späteren Stanzschritt, insbesondere welcher mit einer anderen Werkzeugeinheit (W2) derselben Presse (P) oder einer anderen Presse durchgeführt wird, wenigstens eine Ausstanzung (8) eingebracht wird, insbesondere wobei durch die wenigstens eine Ausstanzung (8) wenigstens eine Positioniergeometrie (5.1) entfernt wird, vorzugsweise wobei eine Ausstanzung (8) eine fluidführende Funktion in einem Paket mehrerer Elektrolyseurplatten oder Brennstoffzellplatten aufweist.

2. Verfahren nach Anspruch 1, **dadurch gekennzeichnet, dass** mit den zusammenwirkenden Umformungsstrukturen von unterem und oberem Umformungsstempel (2, 3) der Werkzeugeinheit (W1) in einem einzelnen Hub der Werkzeugeinheit (W1) eine Anzahl von N Mustereinheiten des Teilbereichs (T) gleichzeitig eingebracht wird, wobei N>=2 ist.

3. Verfahren nach Anspruch 2, **dadurch gekennzeichnet, dass** nach einem Hub der Werkzeugeinheit (W1) durch den Weitertransport des Blechs (1) dessen eingebrachtes Muster in zumindest teilweise Überlappung, insbesondere ein im vorherigen Hub erzeugter Bereich des eingebrachten Musters in Überlappung, mit den Umformungsstrukturen von oberem und unterem Umformungsstempel (2, 3) gebracht wird.

4. Verfahren nach Anspruch 2 oder 3, **dadurch gekennzeichnet, dass** das Blech (1) um den M-fachen Musterabstand (6.3) in der Förderrichtung weiterbewegt wird, wobei M<N ist.

5. Verfahren nach einem der vorherigen Ansprüche, **dadurch gekennzeichnet, dass** in der Werkzeugeinheit (W1) ein Element (5) zum Einbringen der Positioniergeometrie (5.1), insbesondere ein Lochstempel (5), und das Positionierelement (4) in der Förderrichtung mit einem Abstand angeordnet werden, welcher kleiner ist als die Anzahl der mit den Umformungsstempeln (2, 3) formbaren Mustereinheiten (6.1), insbesondere welcher M x Musterabstand (6.3) entspricht.

6. Verfahren nach einem der vorherigen Ansprüche, **dadurch gekennzeichnet, dass** in wenigstens einer weiteren Werkzeugeinheit (W2) derselben Presse (P) oder einer anderen Presse Musteranteile des Umformungsmusters in das Blech (1) eingebracht werden und/oder Ausstanzungen (8) und/oder Randschnitte (9) in das Blech (1) eingebracht werden, die nicht Teil des Teilbereichs (T) sind, insbesondere außen um diesen herum angeordnet sind.

7. Verfahren nach Anspruch 6, **dadurch gekennzeichnet, dass** die wenigstens eine weitere Werkzeugeinheit (W2) eine Bearbeitung des Bleches (1) zeitlich nach dem Einbringen des wenigstens einen Teilbereichs (T) vornimmt, insbesondere mit der wenigstens einen weiteren Werkzeugeinheit (W2) in einem einzigen Hub zusätzlich zu der Gesamtanzahl der Hübe zum Einbringen des wenigstens einen Teilbereichs (T) das Blech (1) fertiggestellt wird.

8. Verfahren nach Anspruch 6 oder 7, **dadurch gekennzeichnet, dass** mit der wenigstens einen weiteren Werkzeugeinheit (W2) die Ausstanzungen (8) in das Blech (1) eingebracht werden, welche die Positioniergeometrien (5.1) vollständig überdecken, insbesondere die Positioniergeometrien (5.1) hierdurch entfernen.

9. Presse (P) zur Durchführung eines Verfahren nach einem der vorherigen Ansprüche, die wenigstens eine Werkzeugeinheit (W1) umfasst, wobei die Werkzeugeinheit (W1) einen oberen und einen unteren Umformungsstempel (2, 3) aufweist, mit deren zusammenwirkenden Umformungsstrukturen in einem einzelnen Hub der Werkzeugeinheit (W1) wenigstens eine Mustereinheit (6.1) eines Teilbereichs (T) aus einem in ein Blech (1) einzubringenden Umformungsmuster einbringbar ist, welcher in wenigstens einer Musterrichtung (6.2) mehrere mit einem Musterabstand (6.3) nebeneinanderliegende identische Mustereinheiten (6.1) aufweist, und die Werkzeugeinheit (W1) eingerichtet ist mit mehreren Hüben den Teilbereich (T) sukzessive bis zur Vervollständigung zu formen, **dadurch gekennzeichnet, dass** und mit jedem Hub der Werkzeugeinheit (W1) in das Blech (1) eine Positioniergeometrie (5.1) einbringbar ist, insbesondere eine Positionieröffnung einstanzbar ist, und in der Werkzeugeinheit (W1) oder der Presse (P) ein Positionierelement (4) vorgesehen ist, insbesondere ein Positionierstift vorgesehen ist, wobei vor und/oder mit der Schließbewegung eines Hubes das Positionierelement (4) und die Positioniergeometrie (5.1) zueinander in eine vorbestimmte Lage zueinander bringbar sind, insbesondere der Positionierstift (4) in die Positionieröffnung (5.1) einfahrbar ist, und die Werkzeugeinheit (W1) eingerichtet ist, die Positioniergeometrien (5.1) jeweils in einem Bereich des Blechs (1) anzuordnen, in welchem in einem späteren Stanzschritt, insbesondere welcher mit einer anderen Werkzeugeinheit (W2) derselben Presse (P) oder einer anderen Presse durchführbar ist, wenigstens eine Ausstanzung (8) einbringbar ist, insbesondere wobei durch die wenigstens eine Ausstanzung (8) wenigstens eine Positioniergeometrie (5.1) entfernbar ist, vorzugsweise wobei eine Ausstanzung (8) eine fluidführende Funktion in einem Paket mehrerer Elektrolyseurplatten oder Brennstoffzellplatten aufweist.

10. Presse nach Anspruch 9, **dadurch gekennzeichnet, dass** sie, insbesondere deren Werkzeugeinheit (W1), eine Fördervorrichtung (F) aufweist, mittels der das Blech zwischen aufeinanderfolgenden Hüben innerhalb der Werkzeugeinheit (W1) weiterbewegbar ist, insbesondere um wenigstens einen Musterabstand (6.3), vorzugsweise um ein Vielfaches des Musterabstands (6.3) weiterbewegbar ist.

11. Presse nach Anspruch 9 oder 10, **dadurch gekennzeichnet, dass**
a. sie wenigstens eine weitere Werkzeugeinheit (W2) aufweist, insbesondere als Folgewerkzeug, mit welcher, vorzugsweise in einem einzigen Hub, Musteranteile des Umformungsmusters in das Blech (1) einbringbar sind und/oder Ausstanzungen (8) und/oder Randschnitte (9) in das Blech (1) einbringbar sind, die nicht Teil des Teilbereichs (T) sind, insbesondere außen um diesen herum angeordnet sind, oder
b. die Werkzeugeinheit (W1) zur Formung des Teilbereichs (T) des Umformungsmusters in der Presse (P) austauschbar ist gegen eine Werkzeugeinheit (W2), mit welcher, vorzugsweise in einem einzigen Hub, Musteranteile des Umformungsmusters in das Blech (1) einbringbar sind und/oder Ausstanzungen (8) und/oder Randschnitte (9) in das Blech (1) einbringbar sind, die nicht Teil des Teilbereichs (T) sind, insbesondere außen um diesen herum angeordnet sind.
